# DEMANDE DE BREVET EUROPEEN

(11) **EP 0 834 651 A1**
(43) Date de publication de la demande: **08.04.1998**
(21) Numéro de dépôt: 97402308.7
(22) Date de dépôt: 02.10.1997
(51) Int. Cl.: F02K 1/76

(54) **Procédé et dispositifs de fermeture des portes d'inverseur de poussée**

(30) Priorité: 03.10.1996 FR 9612047
(71) Demandeur: Hispano-Suiza, 75015 Paris (FR)
(72) Inventeur: Baudu, Pierre André Marcel, 76600 - Le Havre (FR); Gonidec, Patrick, 76290 - Montivilliers (FR); Vauchel, Guy Bernard, 76610 - Le Havre (FR)

(57) **Abrégé**

L'invention propose un procédé de fermeture des portes (10) d'un inverseur de poussée (8) pour aéronef permettant d'effectuer cette fermeture malgré l'augmentation de la pression du flux d'air de propulsion produit par le turbomoteur. Ce procédé est remarquable en ce qu'il comporte les opérations suivantes :
a) Attraper la porte (10) par son extrémité avant (10a) avant la fermeture complète de la porte (10),
b) tirer la porte (10) par son extrémité avant (10a) jusqu'à la position fermée,
c) reprendre l'effort de traction ainsi produit sur la partie (8a) de la structure (8) en regard de l'extrémité avant (10a) de la porte (10). l'invention propose aussi des dispositifs spécialement conçus pour mettre en oeuvre le procédé.

## Description

L'invention se rapporte aux inverseurs de poussée du type à portes pour aéronefs, et plus particulièrement à un procédé de fermeture desdites portes, ainsi qu'à des dispositifs spécialement conçus pour mettre en oeuvre ce procédé.

Les inverseurs de poussée du type dit "à portes" pour aéronef sont des dispositifs bien connus incorporés dans les nacelles qui entourent les turbomoteurs. La nacelle est mince et légère, pour des raisons évidentes d'aérodynamique et de poids à transporter. L'inverseur de poussée se présente sous la forme d'une structure fixe annulaire entourant le turbomoteur, cette structure fixe comportant une pluralité d'ouvertures radiales obturées par des portes pivotantes, ces portes ayant aussi pour fonction en position ouverte de dévier vers l'avant le flux d'air de propulsion généré par le turbomoteur, afin de ralentir l'aéronef. Chaque porte est manoeuvrée entre les positions "ouverte" et "fermée" par au moins un vérin de porte prenant appui sur la structure fixe de l'inverseur. Les portes sont maintenues en position fermée par des verrous. L'étanchéité à la fermeture est assurée par des joints en élastomère disposés et comprimés entre la structure fixe et la porte.

Pour chaque porte, au moins un vérin de porte est monté pivotant ou rotulant par une extrémité sur la structure fixe et par l'autre extrémité sur la porte. Ce mécanisme devant se loger dans l'épaisseur de la nacelle, l'axe géométrique du vérin se rapproche de l'axe géométrique de pivotement de la porte lorsque celle-ci se referme, de sorte que la force de traction du vérin ne génère sur la porte qu'un couple de pivotement de plus en plus faible devenant insuffisant sous certaines conditions ou dans un domaine de vol particulier pour fermer complètement la porte, alors que les sollicitations exercées par le vérin sur la structure et sur la porte deviennent très importantes et provoquent des flexions non négligeables de la structure et de la porte.

La fermeture d'une porte s'accompagne aussi de la mise en compression des joints d'étanchéité entre la porte et la structure fixe, ce qui provoque sur cette porte un couple résistant supplémentaire venant s'additionner au couple résultant de la pression du flux d'air de propulsion sur ladite porte. Le phénomène exposé ci-dessus est aggravé par la nécessité de "sur-escamoter" la porte, c'est à dire d'enfoncer la porte plus que nécessaire dans l'ouverture de la structure fixe, et de comprimer les joints afin de pouvoir verrouiller la porte malgré les éventuelles déformations de la structure et de la porte et de réduire l'effort de déplacement du pêne du verrou entre les positions rentrée ou sortie, c'est à dire ouverte ou fermée, cette porte se repositionnant ensuite rigoureusement dans l'alignement des parois extérieures et intérieures de la nacelle sous l'effet combiné de la pression du flux d'air de propulsion et de l'élasticité des joints d'étanchéité, ceci en prenant appui sur le pêne du verrou.

Afin de pouvoir assurer la fermeture des portes, l'homme du métier est conduit à définir un compromis entre deux solutions :
1) Augmenter la force des vérins de porte, et la résistance de la structure de l'inverseur et desdites portes, ce qui augmente la masse de l'inverseur et par répercussion augmente la consommation de carburant de l'aéronef et réduit la charge utile transportable.
2) Imposer une limitation au régime du turbomoteur pendant la fermeture des portes, afin de réduire la pression des gaz de propulsion et le couple résistant exercé sur les portes. Cette limitation peut causer de graves difficultés dans certaines situations. Par exemple, lorsque le pilote est en phase d'atterrissage avec les inverseurs de poussée en action, et qu'un obstacle imprévu apparait devant lui, il ne pourra utiliser la pleine puissance des turbomoteurs pour reprendre de l'altitude et passer par dessus l'obstacle qu'après avoir refermé les portes des inverseurs de poussée, ce qui peut demander un délai de plusieurs secondes.

Le problème est en conséquence de pouvoir fermer les portes d'un inverseur de poussée malgré une pression plus importante du flux d'air de propulsion et sans augmenter la masse de l'inverseur.

Pour mettre en fonctionnement l'inverseur de poussée, il suffit de déverrouiller les portes, celles-ci s'ouvrant alors essentiellement sous l'effet de la pression du flux d'air de propulsion. De ce fait, le déverrouillage accidentel d'une porte peut avoir des conséquences catastrophiques sur le vol de l'avion, ne serait-ce qu'en déstabilisant celui-ci, et une grande sécurité dans le verrouillage des portes en position fermée est impérative.

L'invention propose un procédé de fermeture des portes d'un inverseur de poussée pour aéronef, ledit procédé étant remarquable en ce qu'il comporte les opérations suivantes :
a) Attraper la porte par son extrémité avant la fermeture complète, par le terme attraper on entend saisir la porte dans sa position courante, entre la position ouverte et la position fermée,
b) tirer ensuite la porte par son extrémité avant jusqu'en position fermée,
c) reprendre l'effort de traction ainsi produit sur la partie de la structure fixe de l'inverseur située en regard de l'extrémité avant de la porte, cet effort de traction étant en conséquence exercé entre l'extrémité avant de la porte et la partie de la structure en regard de ladite partie avant.

Le terme terme "extrémité avant de la porte" désigne ici l'extrémité avant proprement dite de la porte ainsi que les parties latérales de cette même porte situées à l'avant de ladite porte.

On génère ainsi sur la porte un couple de fermeture important à partir d'un effort de traction réduit appliqué entre la porte et la structure, puisque le vecteur représentant l'effort de traction est éloigné de l'axe de pivotement de la porte.
Le couple de fermeture engendré par le verrou s'ajoute à celui produit par le vérin de porte et permet de refermer ladite porte avec une pression des gaz de propulsion plus importante. L'effort de traction très inférieur à celui du vérin de porte permet d'effectuer cette opération sans devoir renforcer la structure et les portes, donc sans les alourdir.

Dans une première forme de mise en oeuvre du procédé, l'extrémité avant de la porte est attrapée au départ de la mise en compression des joints d'étanchéité entre la porte et la structure fixe, afin de générer au moins en partie le couple supplémentaire de compression desdits joints et d'en décharger en conséquence le vérin de porte.
Cette solution présente l'avantage de n'exiger qu'un faible déplacement du point d'application de l'effort de traction sur l'extrémité avant de la porte, au moment où le vérin de porte exerce l'effort de traction le plus important, et est donc mécaniquement plus simple à mettre en oeuvre dans l'épaisseur de la nacelle.

Dans une forme de mise en oeuvre préférée du procédé objet de l'invention, l'extrémité avant de la porte est attrapée avant la mise en compression des joints d'étanchéité entre la porte et la structure fixe, et de préférence à une distance au moins égale à 15% de l'épaisseur e de la nacelle. Ainsi, pendant le mouvement de fermeture de la porte, le couple produit s'additionne plus tôt au couple produit par le vérin de porte, ce qui permet de réduire l'effort maximal que ce vérin de porte doit fournir, et par répercussion d'alléger encore plus ce vérin ainsi que la structure et les portes de l'inverseur.

L'invention propose aussi d'utiliser le verrou de porte pour exercer l'effort de traction entre la partie avant de la porte et la partie du cadre en regard de ladite partie avant, ce verrou de porte étant bien placé sur la partie du cadre en regard de l'extrémité avant de la porte, et offrant déja la fonction de saisie de la porte nécessaire à l'invention.

Avantageusement, on utilisera le verrou de porte selon le processus suivant pour une refermeture de porte:
a) le verrou étant en position ressortie, c'est à dire vers l'extérieur de la nacelle, sortie du pêne dudit verrou, de façon à faire interférence avec un élément de la partie avant de la porte, par exemple un galet, afin d'attraper ladite porte par son extrémité avant dans sa position courante,
b) déplacement centripète du verrou, c'est à dire vers l'intérieur de la nacelle, afin de tirer la porte par son extrémité avant vers la position fermée.

Pour ouvrir la porte, on procédera de la façon suivante :
a) déplaçement centrifuge du verrou, afin de le mettre en position ressortie,
b) rentrée du pême du verrou, afin de lâcher la porte, le verrou étant de préférence laissé dans sa position sortie.

L'invention propose aussi un dispositif spécialement conçu pour mettre en oeuvre le procédé et remarquable en ce que le verrou est monté coulissant sur une glissière sensiblement radiale solidaire de la structure fixe de la partie en regard de l'extrémité avant de la porte, le déplacement du verrou étant commandé par un vérin auxiliaire. Un tel vérin peut être de taille réduite puisque l'effort de traction qu'il exerce sur l'extrémité avant de la porte génère sur ladite porte un couple de fermeture important. Cette solution présente l'avantage d'utiliser directement le verrou de porte existant.

Dans un mode de réalisation préféré cependant, le pêne du verrou sera monté pivotant dans le verrou et sera prolongé à l'arrière par une came arrivant dans l'alignement de la glissière. Ainsi, au début du déplacement centripète du verrou, la came arrivant en butée sur la glissière sera repoussée par ladite glissière, ce qui provoquera le pivotement du pêne de la position ouverte vers la position fermée. A la fin de la course du verrou, le pêne sera bloqué dans la position fermée et mis dans l'impossibilité de s'ouvrir tant que le verrou n'aura pas effectué un déplacement centrifuge en sens inverse. Une telle solution présente un double avantage :
- simplification des moyens de commande, un seul vérin suffisant pour commander le déplacement du verrou et du pêne,
- grande sécurité face à un déverrouillage accidentel.

Dans une seconde forme de mise en oeuvre du procédé, l'extrémité avant de la porte est simultanément attrapée et tirée vers la position fermée par le déplacement du pêne au dessus d'un élément de l'extrémité avant de la porte, le pêne faisant office de came.

L'invention propose aussi un dispositif spécialement conçu pour mettre en oeuvre la seconde forme du procédé et remarquable en ce que :
a) le verrou est solidaire de la partie du cadre en regard de l'extrémité avant de la porte,
b) le pêne comporte une rampe permettant de tirer l'extrémité avant de la porte vers la position fermée pendant le verrouillage.

Avantageusement, l'extrémité de la rampe correspondant à la position fermée comporte un secteur avec une pente en sens inverse de celle du reste de la rampe. Ainsi, la réaction de l'extrémité avant de la porte sur le pêne tend à pousser le pêne dans le sens du verrouillage. Le dispositif présente en conséquence une grande sécurité au déverrouillage de la porte ;

Le procédé objet de l'invention présente l'avantage de ne pas exiger de modifications de la structure de l'inverseur pour être mis en oeuvre. L'amélioration de la fermeture des portes qu'il procure offre à l'homme du métier une plus grande latitude dans le positionnement des vérins de porte ainsi que la possibilité d'alléger l'inverseur dont la structure peut être moins sollicitée.

Les dispositifs conçus pour mettre en oeuvre l'invention présentent aussi un double avantage :
- celui de se loger facilement dans l'épaisseur de la nacelle,
- sans interférer avec la nacelle à l'avant de l'inverseur, puisque l'encombrement longinal du dispositif, c'est à dire parallèlement à l'axe géométrique du turbomoteur, est très réduit.

L'invention sera mieux comprise et les avantages qu'elle procure apparaîtront plus clairement au vu des exemples de réalisation et des figures annexées :

La figure 1 illustre un inverseur à porte sur lequel on applique les moyens de l'invention.

La figure 2 illustre un dispositif dans lequel le verrou est monté coulissant sur une glissière radiale.

la figure 3 illustre un perfectionnement du dispositif de la figure 2 comportant un ergot de sécurité entre le verrou et la glissière.

La figure 4 illustre un perfectionnement du dispositif dans lequel le pêne du verrou est actionné par came.

La figure 5 illustre une variante du dispositif de la figure 2 dans laquelle le verrou est monté basculant sur la structure de l'inverseur.

La figure 6 illustre un dispositif dans lequel le pêne du verrou fait office de came.

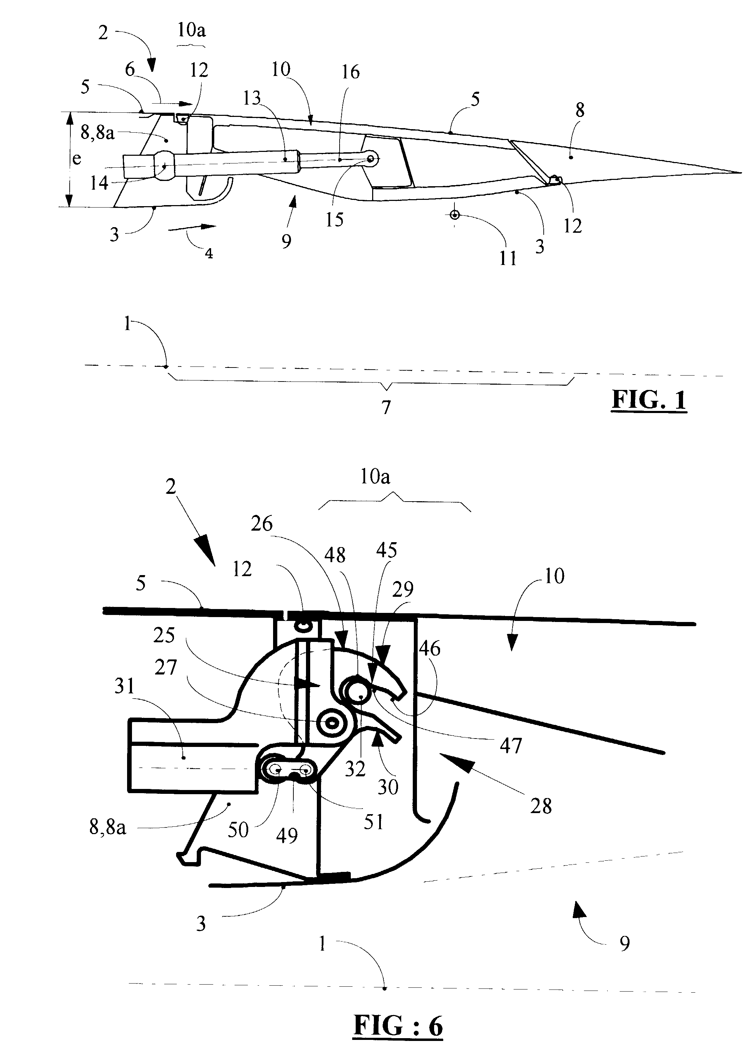

On se reportera en premier lieu à la figure 1. Le turbomoteur non représenté d'axe géométrique 1 est entouré d'une nacelle 2 approximativement circulaire centrée sur l'axe géométrique 1. Cette nacelle 2 est délimitée intérieurement par une paroi 3 qui canalise vers l'arrière le flux d'air de propulsion 4 produit par le turbomoteur, et extérieurement par une seconde paroi 5 le long de laquelle s'écoule l'air ambiant 6. l'inverseur de poussée 7 est délimité intérieurement et extérieurement respectivement par les parois 3 et 5 et comporte une structure fixe rigide 8 dans laquelle sont aménagées des ouvertures rectangulaires 9 entre les parois 3 et 5, chaque ouverture 9 étant occultée par une porte 10 articulée sur un axe géométrique de pivotement 11. On référencera 10a l'extrémité avant de la porte 10, et 8a la partie de la structure fixe 8 en regard de l'extrémité 10a.
On notera e l'épaisseur de la nacelle au niveau de la partie 8a de la structure fixe 8 en regard de l'extrémité 10a de la porte 10, soit la distance entre les parois intérieures et extérieures respectivement 3 et 5.
L'étanchéité à l'air entre la porte 10 et la structure 8 est assurée par un ou plusieurs joints d'étanchéité 12 en élastomère qui sont mis en compression entre la structure 8 et la porte 10 lorsqu'elle est fermée.

L'ouverture et la fermeture de la porte 10 s'effectue par pivotement selon l'axe géométrique 11 et sont commandées par au moins un vérin de porte 13 dont une extrémité est solidaire de la structure fixe 8 par l'intermédiaire d'une rotule 14, alors que son autre extrémité est solidaire de la porte 10 par l'intermédiaire d'une articulation 15. En position fermée, la porte 10 est verrouillée par son extrémité avant 10a à la partie 8a de la structure fixe 8 située en regard de ladite extrémité 10a. On référencera 16 l'axe géométrique du vérin de porte 13, cet axe géométrique 16 passant par le centre de la rotule 14 et celui de l'articulation 15. Le vérin de porte 13 doit se loger entre les parois intérieures et extérieures respectivement 3 et 5 lorsque la porte 10 est fermée, et doit aussi assurer l'ouverture complète de ladite porte 10. L'environnement géométrique de la nacelle implique d'avoir le vérin 13 pratiquement parallèle à l'axe géométrique 1. Ainsi, lorsque la porte 10 approche de la position fermée, l'axe géométrique 16 du vérin 13 se rapproche fortement de l'axe géométrique 11 de la porte 10, de sorte que l'effort de traction exercé par le vérin 13 sur la porte 10 ne génère plus qu'un couple de fermeture de plus en plus faible sur ladite porte 10.

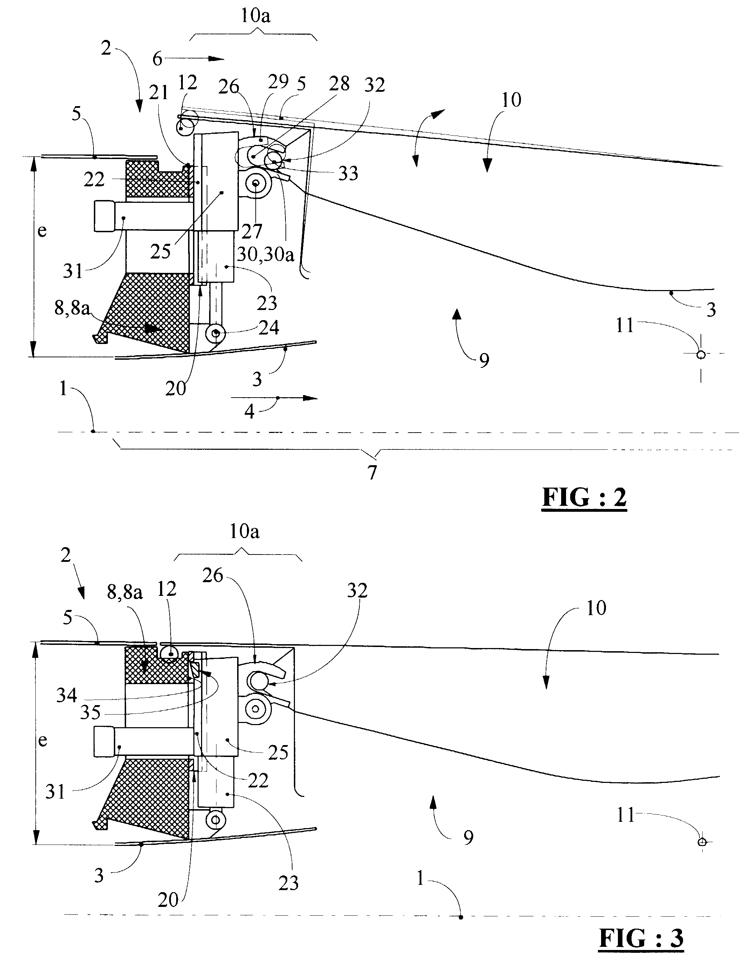

On se reportera maintenant à la figure 2. Une glissière radiale 20 est disposée sur la partie 8a de la structure 8 en regard de l'extrémité avant 10a de la porte 10. Cette glissière 20 est dite radiale car le coulissement s'effectue suivant une direction sensiblement perpendiculaire à l'axe géométrique 1 du turbomoteur. On notera 21 l'extrémité de la glissière 20 la plus à l'extérieur, située juste en dessous de la paroi extérieure 5 de la porte 10 lorsque celle-ci est fermée. Dans la glissière 20 est disposé un coulisseau 22 actionné par un vérin de commande 23 par exemple hydraulique lui aussi sensiblement perpendiculaire à l'axe géométrique 1, et dont une extrémité est solidaire par une articulation 24 à la structure fixe de l'inverseur.

Sur le coulisseau 22 est monté un verrou 25 du type habituellement utilisé pour verrouiller les portes d'inverseur 10. Ce verrou 25 comporte un pêne 26 pivotant par une articulation 27 contre le corps du verrou non référencé. Le pêne pivotant 26 comporte une échancrure 28 en U bordée vers l'extérieur de la nacelle par une aile supérieure 29 et vers l'intérieur de la nacelle par une aile inférieure 30, les ailes 29 et 30 étant en forme d'arcs de cercles centrés sur l'articulation 27, l'aile inférieure 30 étant toutefois prolongée par une extrémité rectiligne 30a dépassant de l'aile supérieure 29. La commande de déverrouillage du pêne est commandée par un vérin 31 passant dans une ouverture de la structure fixe 8. Selon le concept de verrou retenu, toute la structure de celui-ci peut être logée du côté aval de la structure fixe. Sur l'extrémité avant 10a de la porte 10 se trouve un galet 32 en forme de tonnelet monté pivotant autour de l'axe géométrique 33.

La fermeture de la porte 10 s'effectue selon le processus suivant :
- le verrou 25 étant bloqué dans sa position ressortie et le pêne 26 est en position rentrée, c'est à dire ouverte,
- le galet 32 de la porte 10 arrive contre l'extrémité rectiligne 30a du pêne 26 et actionne celui-ci vers la position fermée, c'est à dire quele pêne pivote de façon à ce que l'aile supérieure 29 passe au dessus du galet 32 jusqu'à une position de condamnation de manoeuvre du pêne par un système de verrouillage automatique contenu dans le verrou 25,
- dès que le pêne 26 est verrouillé, le vérin 23 déplace le verrou 25 vers l'intérieur de la structure suivant un mouvement centripète, ce qui a pour effet de tirer la porte 10 jusqu'en position fermée par l'intermédiaire du verrou 25, du pêne 26 et du galet 32, l'effort de fermeture étant repris par l'intermédiaire de l'articulation 24 sur la partie 8a de la structure 8 en regard de l'extrémité avant 10a de la porte 10.

Pendant cette manoeuvre le galet roule sur l'extrémité rectiligne de l'aile supérieure 29 jusqu'à une position où il peut rendre la manoeuvre d'ouverture intempestive du pêne 26 impossible par l'inversion du sens de basculement donné parle point d'application de l'effort du galet par rapport à l'axe de rotation 27 du pêne 26, celui-ci devenant alors auto fermant.

Il est à noter que la manoeuvre d'actionnement du pêne 26 et le déplacement du verrou 25 vers l'intérieur peut se faire simultanément.

L'ouverture de la porte s'effectue selon le processus inverse, néanmoins, en phase d'ouverture normale, la pratique habituelle pour libérer le pêne 26 de son système de verrouillage automatique et permettre sa manoeuvre, est de sur-escamoter suivant un mouvement centripète la porte 10 à l'aide du vérin 13 pour éloigner le galet 32 du pêne. Mais cette phase provoque des déformations de la structure fixe dûs à l'utilisation à pleine puissance du vérin 13. Pour éviter ce problème, il est possible de bloquer ponctuellement la manoeuvre du vérin 13 de porte juste avant la fin de manoeuvre de déploiement du verrou 25 vers l'extérieur. Cette séquence permet ainsi de libérer de tout chargement le pêne 26 par le galet 32 et donc la manoeuvre de déverrouillage de la condamnation du pêne par le vérin 31 peut s'effectuer dans les meilleurs conditions.
La séquence d'ouverture de la porte 10 par le vérin 13 reprend ensuite son cours normal.

Il est bien entendu que l'ouverture en urgence des portes peut être conservée et que dans la position jet direct, c'est à dire verrou 25 en position rétractée, le système de déverrouillage du pêne 26 peut être activé et permette ainsi à la porte de s'ouvrir sans attendre tout le processus déjà décrit.

On se reportera maintenant à la figure 3. Avantageusement, on disposera un moyen de verrouillage automatique du coulisseau 22, ou du verrou 25 qui lui est solidaire, en position rentrée dans la glissière radiale 20. Ce peut être par exemple un évidement 34 disposé dans la glissière 20 et coopérant avec un ergot 35 monté élastiquement sur l'ensemble coulisseau 22 + verrou 25, l'ergot 35 pénétrant dans l'évidement 34 sous l'effet de la poussée de l'élément élastique non représenté lorsque le coulisseau est en position rentrée. Ainsi, l'ergot 35 arrive en butée contre une paroi de l'évidement 34 et empêche tout déplacement centrifuge du coulisseau 22 associé au verrou 25, offrant ainsi une sécurité importante face au risque d'ouverture intempestive de la porte 10, résultant du déplacement accidentel du coulisseau 22 et du verrou associé 25 vers l'extérieur, par exemple suite à une panne du vérin 23, la manoeuvre de désencliquetage étant assujettie à la logique de la commande du verrou 25. On pourra également incorporer un système commandant l'enclenchement du verrou 25. On pourra également incorporer un système mécanique de blocage du vérin 23 en position ouverte pour éviter tout déplacement centripète, par tout concept connu de l'homme de l'art, afin de maintenir la platine 22 en position haute, lors de l'ouverture de la porte, jusqu'à l'enclenchement du verrou 25 parl'olive 32.

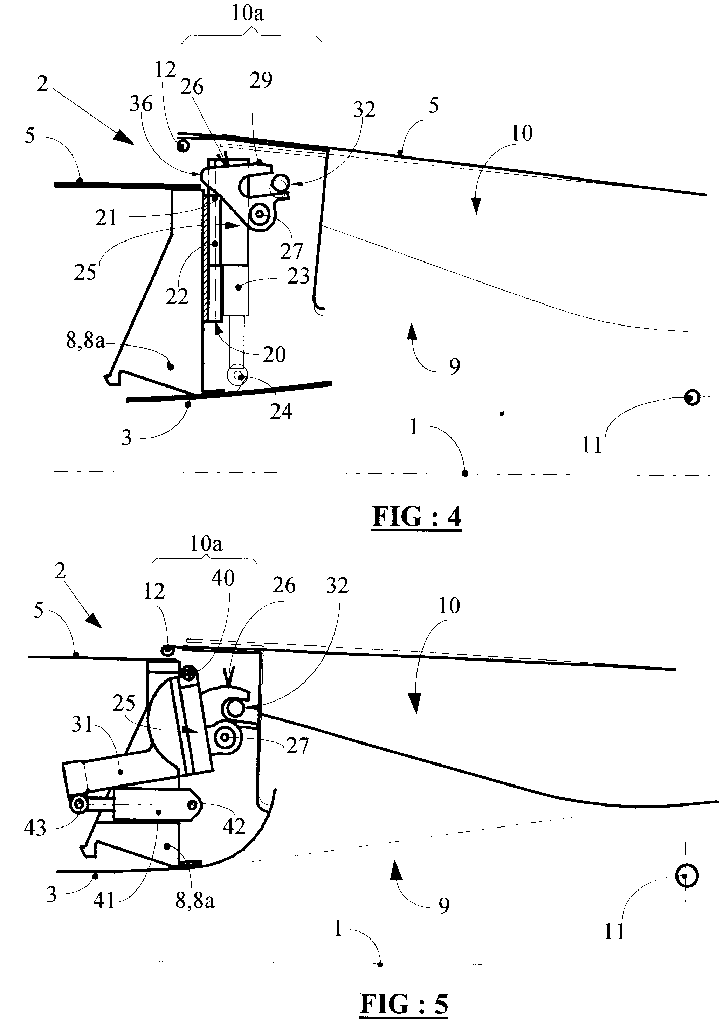

On se reportera maintenant à la figure 4. Dans un autre mode de réalisation de l'invention, le verrou 25 est modifié comme suit :
- suppression du vérin référencé 31 sur la ligne 2 de commande du pêne 26,
- commande du déplacement du pêne 26 de la position ouverte à la position fermée par une came 36 solidaire du pêne et arrivant dans l'alignement de la glissière 20 en regard de son extrémité l'extérieure 21,
- commande du déplacement du pêne 26 en sens inverse par un ressort non représenté.

Ainsi, lorsque le verrou 25 est déplacé vers l'extérieur par le vérin 23, la came 36, passe au dessus de l'extrémité extérieure 21 de la glissière 20, ce qui permet au ressort non représenté de déplacer le pêne 26 vers la position ouverte et de libérer le galet 32.
Ce dispositif offre une grande sécurité face au risque d'ouverture intempestive de la porte 10 suite au déplacement accidentel du pêne 26 vers la position ouverte. On se repportera simultanément aux figures 3 et 4. Le présent dispositif est avantageusement combinable avec le dispositif précédant associant un évidement 34 sur la glissière 20 avec un ergot 35 monté élastiquement sur l'ensemble coulisseau 22 + verrou 25, l'ouverture de la porte 10 ne pouvant se faire maintenant que suite à une pression volontaire exercée sur l'ergot 35 par exemple par un électro-aimant, afin de le dégager de l'évidement 34.
On se reportera maintenant à la figure 5. Le verrou 25 du type déja utilisé dans les exemples illustrés par les figures 2 et 3 est monté basculant, par l'intermédiaire de l'articulation 40, sur la partie 8a de la structure fixe 8 en regard de l'extrémité avant 10a de la porte 10, le basculement étant commandé par un vérin 41 relié d'un côté à la partie 8a de la structure par l'articulation 42, et relié de l'autre côté au verrou 25 par l'articulation 43. Le basculement permet de donner au verrou 25 et notamment au pêne 26 un déplacement centrifuge puis centripète pour aller chercher et tirer la porte 10 par le galet 32, le pivotement du pêne 26 permettant de saisir ou de libérer le galet 32.

On se reportera maintenant à la figure 6. Dans une autre forme de réalisation du dispositif, le verrou 25 est monté comme dans l'art antérieur directement sur la partie 8a de la structure 8 en regard de l'extrémité avant 10a de la porte 10, mais le pêne 26 a un déplacement angulaire plus important autour de l'articulation 27, ce pêne comportant à l'intérieur de l'aile supérieure 29 une rampe 45 susceptible d'imprimer un mouvement centripète de translation au galet 32 lorsque celui-ci est dans l'échancrure en U 28 et que le pêne 26 se referme Pour se faire, la rampe 45 comporte successivement depuis l'ouverture de l'échancrure en U 28 jusqu'au fond :
a) une partie avant 46 se rapprochant de l'articulation 27,
b) un sommet 47,
c) une partie arrière 48 plus courte et s'éloignant de l'articulation 27.
Du fait que la rotation du pêne 26 et par répercussion la course du vérin 31 sont plus importantes, ce vérin 31 actionne le pêne 26 par l'intermédiaire d'au moins une biellette 49 reliée au vérin par une articulation 50 et au pêne par une articulation 51 afin de transformer le mouvement de translation du vérin en mouvement de rotation du pêne.
Le fonctionnement de l'ensemble est le suivant : Lors de la fermeture de la porte 10, le galet 32 arrive en regard de l'échancrure 28 du pêne 26 contre son extrémité rectiligne 30a, et le vérin 31 commande alors la rotation du pêne 26 vers la position de fermeture. Le galet 32 et par répercussion la partie avant 10a de la porte 10 sont alors tirés vers la position fermée par l'action de la partie avant 46 de la rampe 45 sur le galet 32. Le galet 32 passe sur le sommet 47 de la rampe 45, ce qui correspond à une position de sur-escamotage de la porte 10, et arrive sur la partie arrière 48 de la rampe 45 et contre le fond de l'échancrure 28. Du fait que la partie arrière 48 de la rampe va en s'éloignant de l'articulation 27, l'effort centrifuge exercé par le galet 32 sur le pêne 26 tend à faire tourner encore plus ce pêne vers la position fermée. Le pêne 26 se trouve ainsi en position d'équilibre stable et ne nécessite plus de moyen de maintien dans cette position comme c'est le cas dans l'art antérieur. Le présent dispositif présente donc l'avantage d'une grande simplicité et d'une grande sécurité.

L'invention n'est pas limitée aux réalisations représentées, mais en couvre au contraire toutes les variantes qui pourraient leur être apportées sans sortir de leur cadre ni de leur esprit.

Ainsi, au lieu d'utiliser un seul verrou 25 assurant simultanément les fonctions de fermeture et de verrouillage de la porte, on peut utiliser deux verrous :
- le premier assurant la fermeture conformément à l'invention,
- et le second le verrouillage, conformément à l'art antérieur.

Quelque soit la forme de réalisation adoptée, le verrou 25 peut être aussi disposé latéralement de chaque côté de la porte, l'essentiel étant qu'ils soient suffisamment éloignés de l'axe géométrique 11 de pivotement de la porte 10 pour produire avec un effort de traction réduit un couple de fermeture important.

La glissière 20 peut être aussi oblique et non strictement radiale, pour diverses raisons liées à son environnement mécanique. Avantageusement, elle pourra être parallèle à la corde de l'arc décrit par l'axe 33 de pivotement du galet 32 depuis le point où il est attrapé par le verrou 25 jusqu'au point de fermeture complète, cette disposition permettant de réduire la profondeur de l'échancrure en U 28. Avantageusement aussi, la glissière 20 et le vérin 23 pourront être télescopiques, afin d'augmenter l'amplitude du mouvement du verrou 25, ce qui permet d'attraper l'extrémité 10a de la porte 10 encore plus loin du cadre 8, et par répercussion de réduire l'effort de traction maximal que devra fournir le vérin de porte 13.

## Revendications

1. Procédé de fermeture de portes d'inverseurs de poussée pour aéronef, ledit inverseur (7) comportant une structure rigide (8) avec une pluralité d'ouvertures radiales (9) obturées chacune par une porte pivotante (10), comportant une extrémité avant (10a) éloignée de la structure fixe (8) en position ouverte, et en regard d'une partie (8a) de ladite structure fixe (8) en position fermée, caractérisé en ce que :
a) Chaque porte (10) est attrapée par son extrémité avant (10a) avant la fermeture complète,
b) la porte (10) est ensuite tirée par son extrémité avant (10a) jusqu'en position fermée,
c) la reprise de l'effort de fermeture ainsi produit s'effectue sur la partie (8a) de la structure fixe (8) ; en regard de l'extrémité avant (10a), afin de générer sur la porte (10) un couple de fermeture important à partir d'un effort de traction réduit entre la porte (10) et la structure fixe (8);

2. Procédé selon la revendication 1, ledit inverseur (7) comportant des joints d'étanchéité (12) entre la structure (8) et les portes (10), lesdits joints (12) étant comprimés par les portes (10) en position fermée, caractérisé en ce que l'extrémité avant (10a) de chaque porte (10) est attrapée au départ de la mise en compression des joints (12).

3. procédé selon la revendication 1 ou 2, caractérisé en ce que l'extrémité avant (10a) de la porte (10) est attrapée à une distance de la position fermée au moins égale à 15% de l'épaisseur e de la nacelle (2) au niveau de l'extrémité avant (10a).

4. procédé selon l'une quelconque des revendications 1 à 3, l'extrémité avant (10a) de la porte (10) étant verrouillée en position fermée sur la partie (8a) de la structure fixe (8) en regard de l'extrémité avant (10a) par un verrou (25), caractérisé en ce que :
a) l'extrémité avant (10a) est attrapée par le déplacement en position sortie du pêne (26) dudit verrou (25),
b) l'extrémité avant (10a) est tirée vers la position fermée par le déplacement centripète du verrou (25).

5. procédé selon la revendication 1 ou 2, l'extrémité avant (10a) de la porte (10) étant verrouillée en position fermée sur la structure fixe (8) en regard de l'extrémité avant (10a) par un verrou (25), caractérisé en ce que l'extrémité avant (10a) est attrapée et tirée vers la position fermée par le déplacement du pêne (26) du verrou (25) faisant office de came.

6. Dispositif spécialement conçu pour mettre en oeuvre le procédé selon la revendication 4, caractérisé en ce que le verrou (25) est monté coulissant sur une glissière radiale (21) solidaire de la partie (8a) de la structure fixe (8) en regard de l'extrémité avant (10a) de la porte (10).

7. Dispositif selon la revendication 6, caractérisé en ce que le coulisseau (22) est automatiquement verrouillé en position rentrée dans la glissière radiale (20) par un ergot (35) monté élastiquement sur l'ensemble coulisseau (22) + verrou (25).

8. Dispositif selon la revendication 6 ou 7, caractérisé en ce que le pêne (26) est monté pivotant dans le verrou (25), ledit pêne (26) étant solidaire d'une came (36) positionnée dans l'alignement de la glissière (20) lorsque le pêne (26) est en position ouverte, afin de pousser le pêne (26) par l'action de la glissière (20) sur la came (36) pendant le déplacement centripète du verrou (25).

9. Dispositif spécialement conçu pour mettre en oeuvre le procédé selon la revendication 4, caractérisé en ce que le verrou (25) est monté pivotant sur la parite (8a) de la structure fixe (8) en regard de l'extrémité avant (10a) de la porte (10).

10. Dispositif spécialement conçu pour mettre en oeuvre le procédé selon la revendication 5, caractérisé en ce que :
a) le verrou (25) est solidaire de la partie avant (8a) de la structure fixe (8) en regard de l'extrémité avant (10a) de la porte (10),
b) le pêne (26) comporte une rampe (45) afin de tirer l'extrémité avant (10a) vers la position fermée pendant le verrouillage.

11. Dispositif selon la revendication 10, caractérisé en ce que la partie arrière (48) de la rampe (45) correspondant à la position fermée à une pente en sens inverse de celle du reste de la rampe, afin que la réaction de l'extrémité avant (10a) de la porte (10) sur le pêne (26) tende à pousser ledit pêne (26) dans le sens de la fermeture.
